# EUROPEAN PATENT APPLICATION

(11) **EP 1 674 153 A1**
(43) Date of publication of application: **28.06.2006**
(21) Application number: 04386035.2
(22) Date of filing: 22.12.2004
(51) Int. Cl.: B01J 19/12

(54) **Method and apparatus for the conversion of material**

(71) Applicant: Gloryquest Holdings Limited, RIK Aglantzia 2121 (CY)
(72) Inventor: Aggelopoulos, Dimitrios Platonos, Philothei 15237 Athens (GR)

(57) **Abstract**

Method and apparatus for conversion of entropy to antientropy with the use of white electromagnetic noise which simulates the natural or cosmic noise and is emitted with higher intensity than that of the natural prototype. In order to achieve the simulation of the natural prototype, the emission must be complex, doubly polarized, counterclockwise and clockwise, negative and positive. The realization of the method is achieved by the use of two white electromagnetic noise generators, where the one generator feeds a special counterclockwise broadband antenna and the other feeds an identical but clockwise broadband antenna. This complex emission creates a double eddy that completes with information and puts in order the disorderly structures of the matter that surrounds the device.

The result is the elimination of all toxicity from matter and the improvement of the biological and biotic level of all biological, non-parasitic organisms, vegetal and animal, freeing them from any kind and form of disease.

## Description

The present invention concerns method and apparatus that converts entropy to antientropy. This is achieved by the completion and replacement of the disorderly information code of toxic substances with orderly information. In the case of extremely toxic materials where the information structure is false, then with the intense flow of orderly information the existing mistaken code collapses and the extremely toxic material is transformed to other elements with different chemical composition. Finally, it improves the biological and the biotic level of all biological, non-parasitic organisms, vegetal and animal, freeing them from any kind and form of disease.

The above are achieved with the emission of a double signal of white electromagnetic noise, specially modulated, so that the emitted energy-information, being stronger than the natural electromagnetic noise or cosmic noise, completes and transforms the information codes of all matter and biological organisms that are in range of the emission system into information codes relieved from disorderly structure and always according to the natural code.

The decrease of entropy is achieved by feeding with the proper and necessary energy/ information the structure of each atom/molecule/macromolecule and bigger systems in general of the organic and inorganic matter putting in order the structure of the matter. This is achieved with the emission of two opposite and complementary polarized noise emissions, which have to simulate in the best possible way, and have to be closer to the characteristics of the natural or cosmic noise. This double emission of the chaotic noise signal, where the ideal would be to cover the whole electromagnetic spectrum from 1 Hz to 10²⁴ Hz with an analogous increase and decrease of intensity as the prototype of nature teaches us, for immediate results according to each particular application it is possible with counterclockwise electron flow emission apparatuses in simultaneous combination with clockwise electron flow emission devices.

Also, for the correct final emission of those two noise signals should be used as emission antennas, a counterclockwise antenna for the counterclockwise emission and a clockwise antenna for the clockwise emission.

As it is well known, the intensity of the natural or cosmic noise is - 174 dbm. Every double synthetic emission as described above, in higher intensity than that of the natural or cosmic noise, has as a result depending on the intensity the proportionately faster improvement of the quality of the matter exposed to this radiation.

Previous technical levels constitute the inventions WHO 0011135, Wo 86014, Wo 0134728, EP 10999745, EP 1092354, of Nikolaou Athanasios which report that with the emission of a very broad spectrum of electromagnetic waves from 1 Hz to 300 GHz and total mode of their emission either pulsed, or time interrupted, the qualitative improvement of products is actually achieved.

The disadvantages of this method are the following:
a) It reports that all kinds of electromagnetic noise bring about a qualitative improvement, while the only suitable kind is the white noise that resembles the natural noise.
b) It is nowhere mentioned that the total emission has to be double, polarized positively and negatively, clockwise and anti-clockwise, so that the negative emission completes and couples by equilibrating the disorderly positive information of matter and the positive emission balances the disorderly negative information of matter.
c) The reference to the use of an antenna or of a system of antennas is vague and the kind of adequate antennas so as to compose a complete system of emission that can truly achieve complete improvement is not mentioned.
d) The most important difference is that the Nikolaou method is based on the time discontinuity of the emission, while the white noise is a continuous spectrum of sines.

The apparatus consists of two pure white electromagnetic noise generators and two broadband emission antennas. In the construction of the two generators the ideal is to use only noble metals or at least well coated with noble metals any other ordinary metals whose use cannot be avoided. In the generator that feeds the counterclockwise antenna there must be used silver (Ag) and palladium (Pd) and in the generator that feeds the clockwise antenna must be used gold (Au) and iridium (Ir). The construction of the generators is based on the phenomenon of the inversed feeding of a PNP transistor where white noise is produced and then amplified until it reaches an emission power of at least 30 dbm. Special care must be given to the amplification stages so that the production of any kind of electromagnetic scintillation or oscillation noise is avoided. The multilayer coating of the PNP transistor necessarily starts with silver and continues, having the atomic weight as a criterion, with gold, platinum, iridium, osmium, palladium, rhodium and ruthenium, so that there is an analogy between the structure of the antennas and the structure of the generators. The antennas are identical and differ only in the direction that the whips are developed, where in one antenna they are developed counterclockwise and in the other they are developed clockwise.

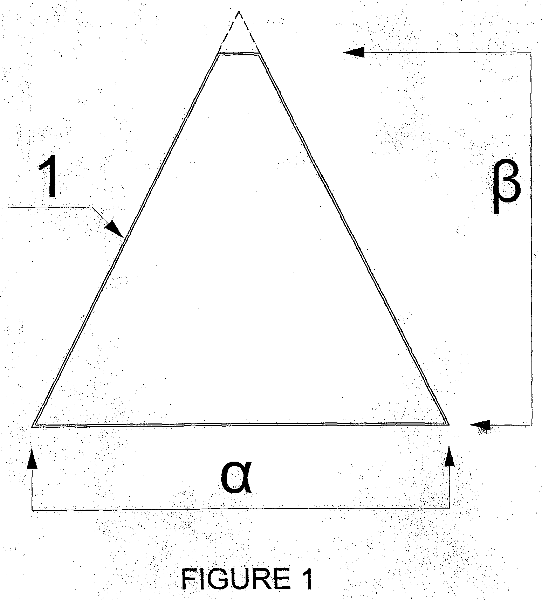

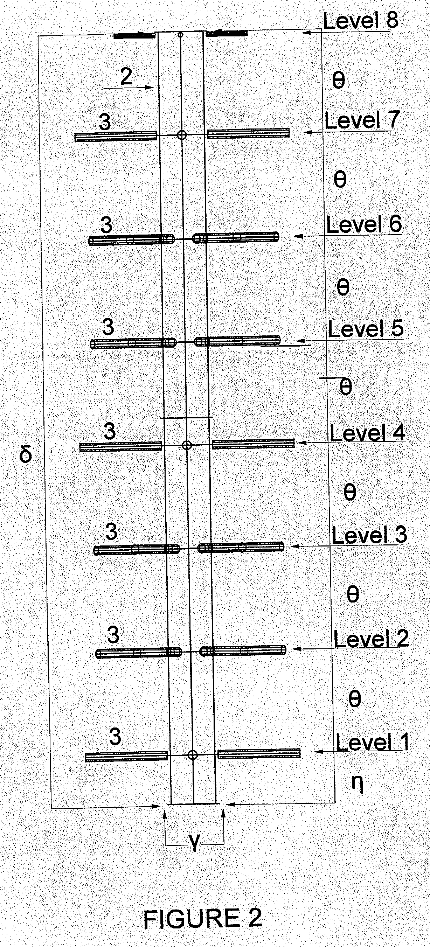

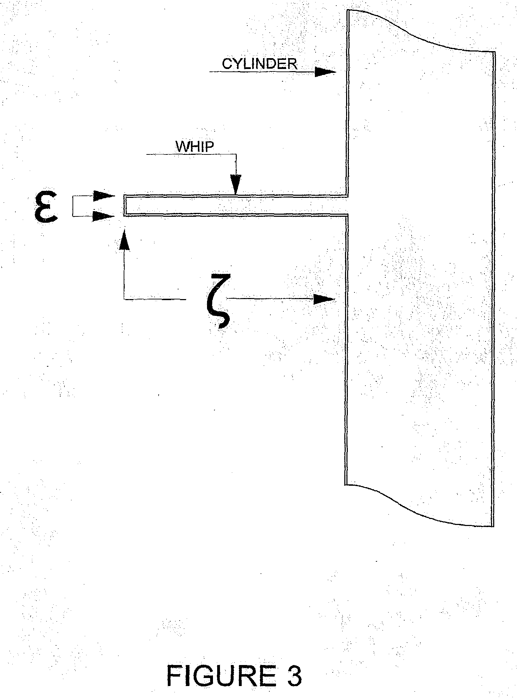

The structure of the antenna is the following: The base of the antenna consists of a truncated cone and the diameter of its base is α, its height is β=α*0,9. That is if it were a normal cone the diameter of the base would be equal with the height of the cone (Figure 1). The second part consists of a cylindrical tube of internal diameter γ=α*0,35 and height δ=α*5,2875. Also, perpendicularly, oppositely, laterally, perimetrically and externally on the surface of the cylindrical tube are placed at regular specific points that are dictated by the geometrical design that will be described afterwards, cylindrical tubes of internal diameter ε=γ/7 and of length ζ=((α*1,145)-γ)/2 (Figures 2, 3), which will henceforth be referred to as whips. The construction metal of these two basic parts of the antenna is pure silver (Ag) 1000°. The thickness and/or cross-section of all the metal components of the antenna must be equal and/or have equal thickness and can range from 0.4mm to 1.4mm, preferably be 1,4mm.

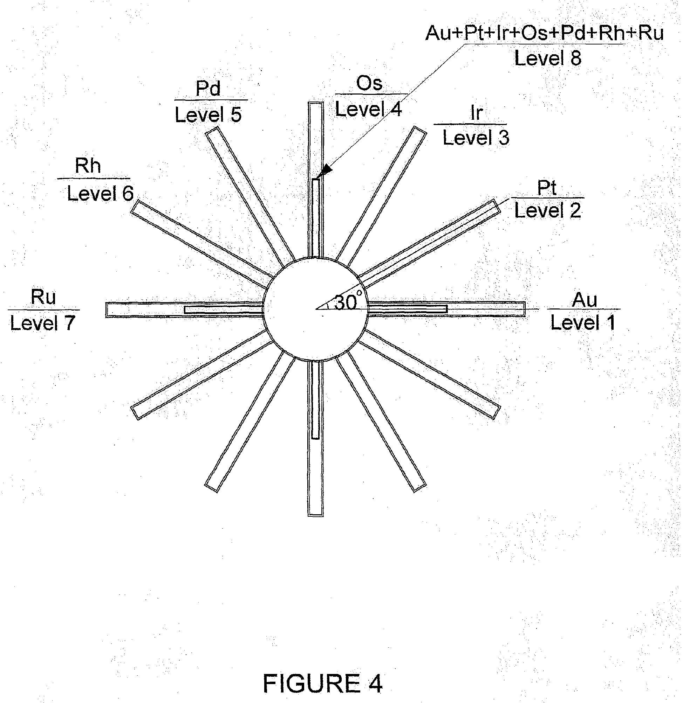

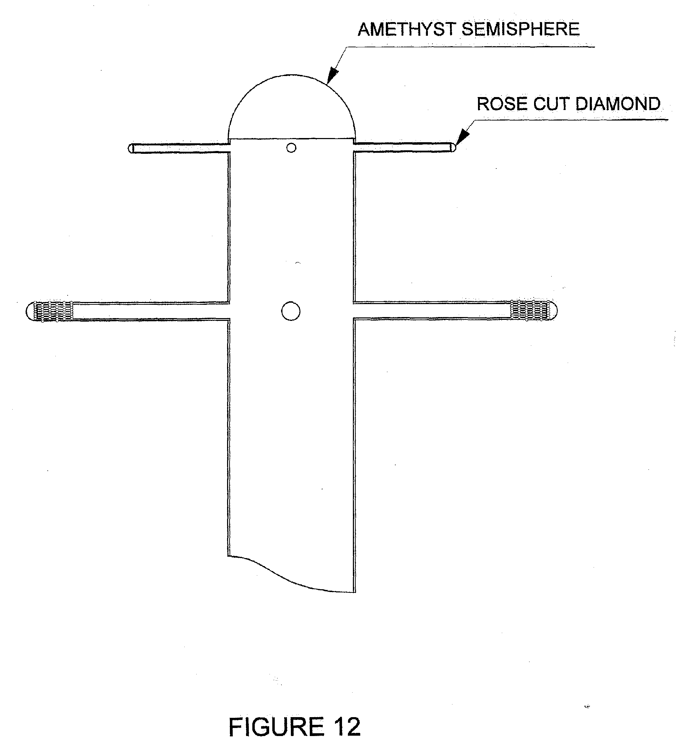

On the perpendicular tube of the antenna and at a distance η=α*0,335 from its lower end there are antidiametrically and crosswise four holes in the wall of a diameter equal to the sum of the internal diameter ε of the tube and of its every thickness and there, there have been placed and/or jointed and/or there has been created a winding and have been screwed four whips of internal diameter ε and length ζ of pure gold (Au) 24K (Figures 2, 3). Then the one antenna with counter-clockwise, and the other with clockwise, upward direction and angular distance from the axis of the tube 30° and distance from the center of the previous holes θ=α*0,7075 there are four holes whose diameter is equal to the sum of the internal diameter ε of the whip and of its every thickness and as above there have been placed four whips of internal diameter ε and length ζ of pure platinum (Pt) (Figures 2, 3, 4). Further above and at equal distances at exactly the same way there have been placed four whips of internal diameter ε and length ζ of pure iridium (Ir) (Figures 2, 3, 4), then similarly four whips of internal diameter ε and length ζ of pure osmium (Os) (Figures 2, 3, 4), then similarly four whips of internal diameter ε and length ζ of pure palladium (Pd) (Figures 2, 3, 4), similarly four whips of internal diameter ε and length ζ of pure rhodium (Rh) (Figures 2, 3, 4), finally in the same way four whips of internal diameter ε and length ζ of pure ruthenium (Ru) (Figures 2, 3, 4). From the center of the last two holes until the upper end of the cylindrical tube the distance is exactly θ. The criterion for the serial selection of the metals is their atomic weight according to the periodic table. Finally, on the upper end of the tube there are similarly placed four whips of internal diameter ε/2 and length ζ/2 of pure silver, coated in layers of 10µm with all the above metals, that is primarily gold, then platinum, iridium, osmium, palladium, rhodium and ruthenium. At the ends of these four multilayer coated small whips are placed four diamonds of rose cut shape of a diameter ε/2 and height ε/4. On the top of the antenna is placed a hemisphere of amethyst of a diameter γ and height γ/2 (Figure 12).

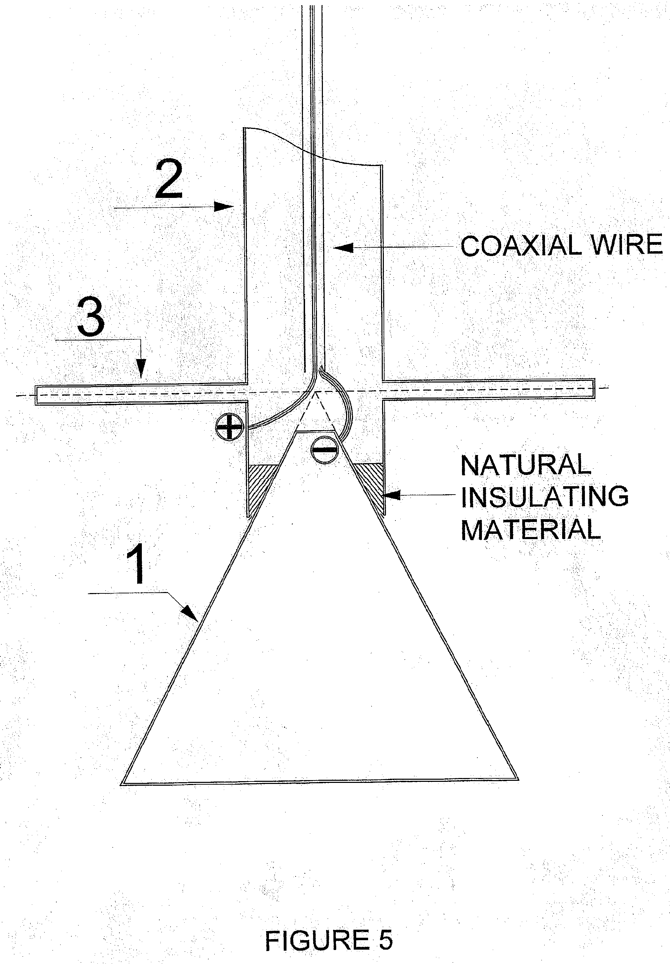

The lower part of the cylindrical tube has been placed perpendicularly to the truncated cone and with the positioning in-between of a thin conical ring (Figure 5) of natural material (wood, mica, glass, etc) for the insulation of the signal from the earth wire. The truncated cone has been filled with salt from the Red Sea for the increase of its earth wire capacity.

Also, the coaxial wire carrier (Figure 5) of the signal that comes from the emission source must enter perpendicularly in the center of the circular opening of the upper part of the antenna and must descend across the imaginable central axis of the tube until almost the lower part where there starts the peak of the truncated cone and where the wire is split, on the one hand into the central wire and/or its conductor, carrier of the signal, that is united with the lower part of the cylindrical tube, and on the other hand into the shielding grid of the wire and/or the earth wire that is united to the upper part of the truncated cone. The contact points of the two wires are diametrically opposite and osculate to the imaginable straight line of a couple of whips of the first level.

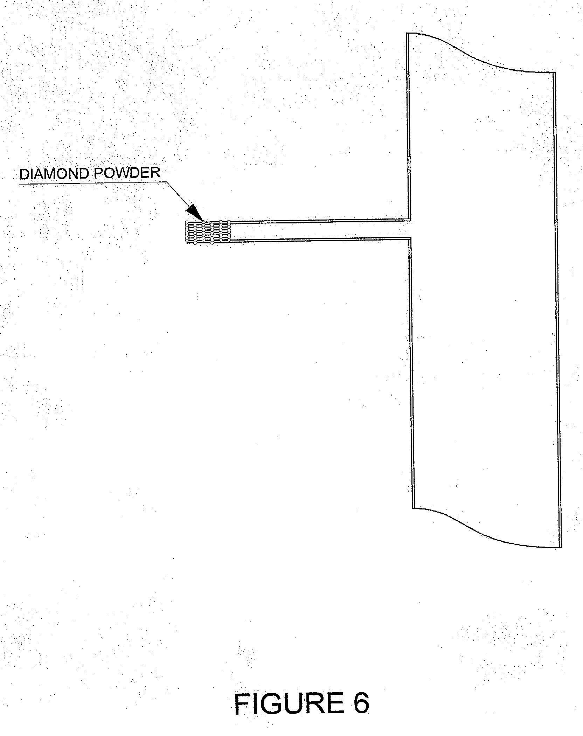

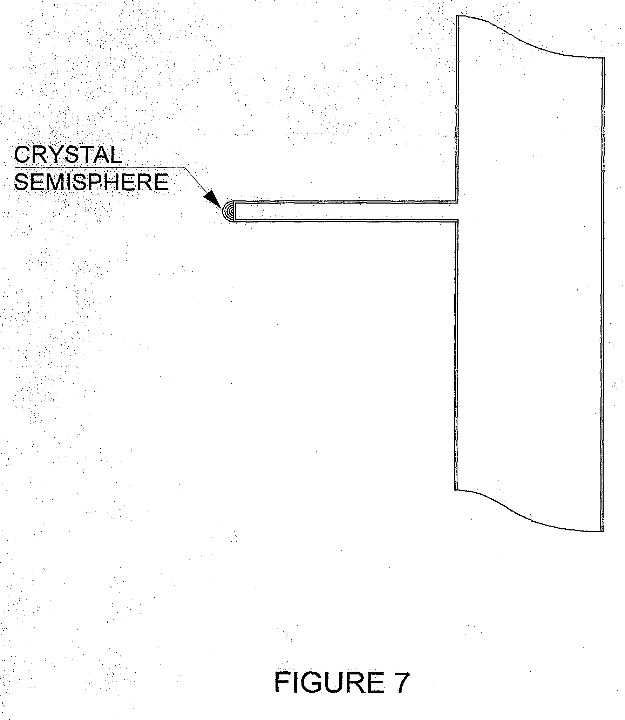

The external ends of all whips and at a length α*0,1 are covered with diamond dust 100 mesh (Figure 6). At the external ends of the whips of the first level (metal Au) are glued half-spheres (Cabochon) (Figure 7) of a diameter equal with the external diameter of the whips of valuable or semi-valuable crystals of red color, that can be of one, two or four different kinds. The best is to have four different crystals of the same color on each level, because this way there is more information. In the case of two or four different kinds the whip that is found on the contact point (+) of the incoming signal is taken to be the primary. When there is a combination of two crystals, then they are placed in opposite couples. For example, if we have ruby and garnet we place: ruby-garnet- ruby-garnet. The criterion is the special weight, where the heaviest is placed first, followed by the immediately lighter and so on, so if we have four different crystals, e.g. the serial sequence is: ruby, garnet, spinel and rubelite. In the second level (metal Pt) the crystals are of orange color, in the third level they are of yellow color, in the fourth level they are of green color, in the fifth level they are of blue color, in the sixth level they are of indigo color, in the seventh level they are of purple color. Only in the seventh level (purple) the sequence is reversed and on the primary whip is placed the crystal with the smaller special weight. Obvious is the analogy to the rainbow.

By feeding the two antennas with the white electromagnetic noise signal of the two generators we achieve the production of two oppositely polarized emissions. These emissions, identical yet of opposite direction, create two vortexes where the information that they carry has been modulated both by the geometry of the antennas as well as by the molecular crystal structure of all the materials that compose the antennas. This is the reason why all the noble metals that exist in nature have been selected. If, in the construction of the antenna were used common metals such as aluminum, chromium, nickel etc, that are products of human activity and do not exist in metal form in nature, then the result would be reversed and we would have an increase in entropy, because the information that would be emitted, would have a disorderly modulation and the harmful consequences of the common metals to health are known.

The influence of the two vortexes on matter is the following: As it is known nature operates with fusion that is with the coupling of negative and positive. So, the counterclockwise vortex by means of the resonance phenomenon couples and completes with electronic information all the disorderly clockwise or positive information of matter, whereas the clockwise vortex couples and completes with positronic information all the disorderly counterclockwise or negative information of matter. The result is the increase of antientropy and the improvement of the concept of life.

A basic indication and result of the correct operation of the system is the reduction of the Planck constant. This can be easily shown with an experiment that measures the Planck constant.

Also, necessary is the analogy of the emission intensity of the two generators. The ideal analogy is 1,3131579 negative to 1 positive.

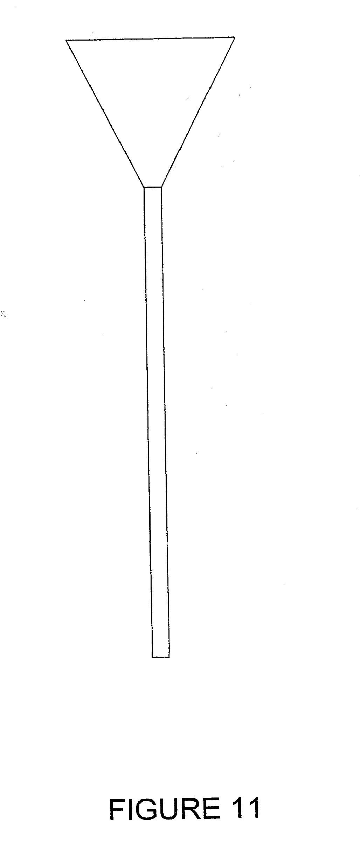

Since in nature only the exchange of information takes place, the whole system must be well grounded so that all the disorderly positive (clockwise) information that flows into the system from the environment is channeled to earth. Also, for the channeling of the disorderly negative (counterclockwise) information is used a reversed cone of pure silver (Figure 11) that channels upwards the surplus of negative information.

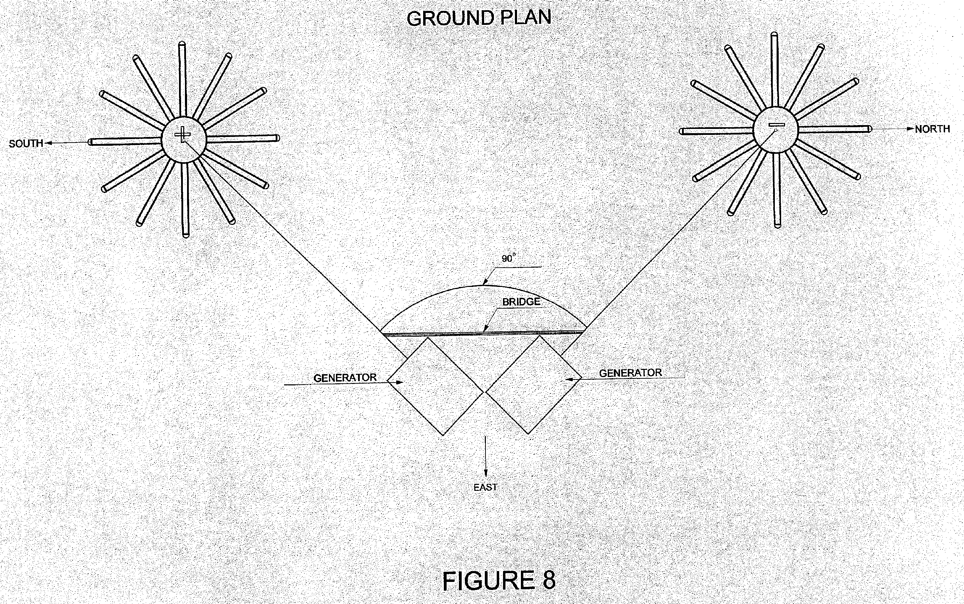

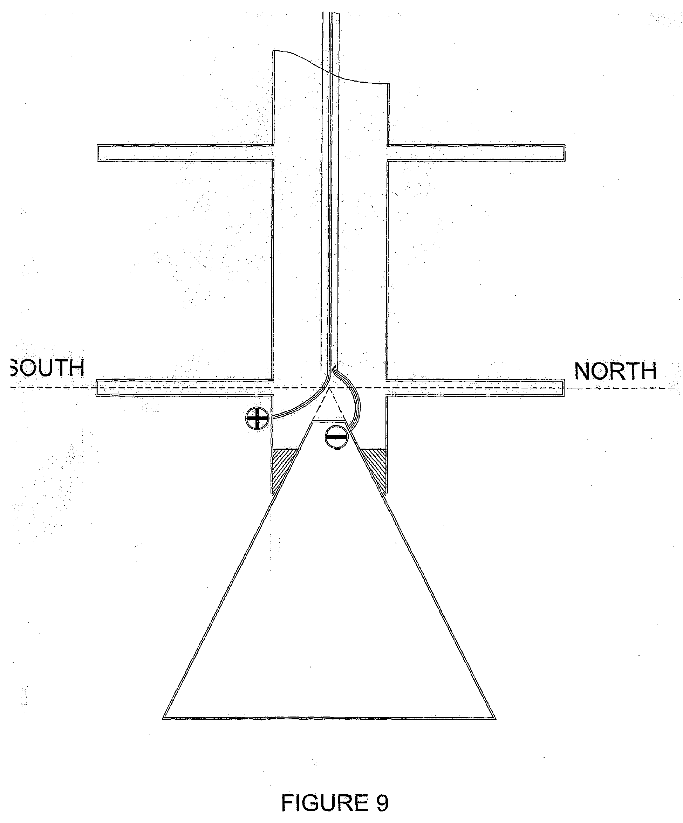

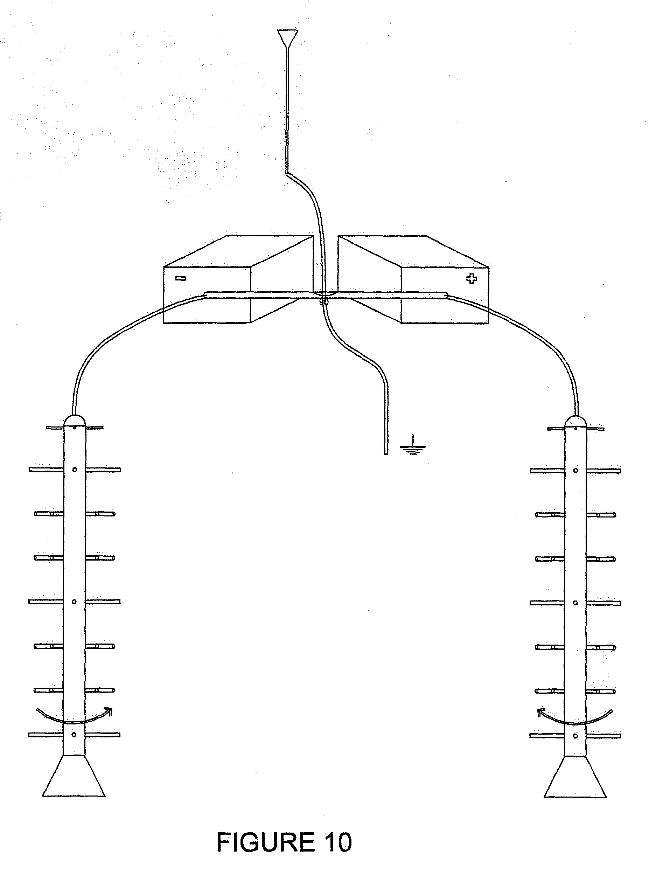

In order to make the aforementioned more comprehensible, we add that, the system operates in the following way, it "invades" the informational structure of the materials that surround it, it completes, transfers but also extracts the cumulated disorderly information that returns to the emission system. That is the antennas on the one hand emit orderly information and on the other hand they receive the surplus of disorderly information from the vibrating matter that surrounds the system. For this reason it is necessary to have both the good grounding and the upward increase of capacity for the channeling of the received by the system disorderly information. The ideal point for receiving the earth wire and the capacity increase is the centre of the bridge that connects the exits of the two generators (Figures 8, 10). The bridge is made of silver. Necessary is also the topographical placement and orientation of the components of the apparatus. The generators are placed towards the east, the counterclockwise antenna towards the north and the clockwise antenna towards the south (Figure 8). The angle formed by the two generators is 90°. This is done in order to align the total emission to the earth's Hartman energy lines. Also, both antennas are north-south oriented (Figures 9, 10), where the north corresponds to the negative (-) and the south to the positive (+).

Indicatively, the antenna can be manufactured as follows: The base and/or the one part of the antenna consists of a truncated cone and the diameter of its base is α=100mm, its height is β=90mm. That is if it were a normal cone the diameter of the base would be equal with the height of the cone (Figure 1). The second part consists of a cylindrical tube of internal diameter γ=35mm and height δ=528,75mm. Also, perpendicularly, oppositely, laterally, perimetrically and externally on the surface of the cylindrical tube are placed at regular specific points that are dictated by the geometrical design that will be described afterwards, cylindrical tubes of internal diameter ε=5mm and of length ζ=53,25mm (Figures 2,3). The construction metal of these two basic parts and/or components of the antenna are pure silver (Ag) 1000°. The thickness and/or cross-section of all the metal components of the antenna must be equal and/or have equal thickness and that is 1,4mm.

On the perpendicular tube of the antenna and at a distance η=33,5mm from its lower end there are opened antidiametrically and crosswise four holes in the wall of a diameter equal to the sum of the internal diameter ε of the whip and of its every thickness and there, there are placed and/or jointed and/or is created a winding and are screwed four whips of internal diameter ε and length ζ of pure gold (Au) (Figures 2, 3). Then with counter-clockwise upward direction and angular distance from the axis of the tube 30° and distance from the center of the previous holes θ=70,75mm there are opened four holes whose diameter is equal to the sum of the internal diameter ε of the whip and of its every thickness and as above there are placed four whips of internal diameter ε and length ζ of pure platinum (Pt) (Figures 2, 3, 4). Further above and at equal distances at exactly the same way there are placed four whips of internal diameter ε and length ζ of pure iridium (Ir), then similarly four whips of internal diameter ε and length ζ of pure osmium (Os), then similarly four whips of internal diameter ε and length ζ of pure palladium (Pd), similarly four whips of internal diameter ε and length ζ of pure rhodium (Rh) and finally in the same way four whips of internal diameter ε and length ζ of pure ruthenium (Ru) (Figures 2, 3, 4). Alternatively, the whips may be of pure silver ant then coated with at least 10 µm of the respective noble metals. From the center of the last upper holes until the upper end of the cylindrical tube the distance is 70,75mm. Finally, on the upper end of the tube there are similarly placed four whips of external diameter ε/2 and length ζ/2 of pure silver, coated in layers of 10µm with all the above metals, that is primarily gold, then platinum, iridium, osmium, palladium, rhodium and ruthenium. On the ends of these four multiplayer coated small whips are placed four diamonds of rose cut shape of a diameter ε/2 and height ε/4. On the top of the antenna is placed a hemisphere of amethyst of a diameter γ and height γ/2.

Then we cover externally with casein all the ends of the whips and at a length of 10mm we glue diamond dust of 100 mesh (Figure 6). Then we place the lower part of the cylindrical tube perpendicularly to the truncated cone and with the placing in-between of a thin conical ring of natural material (wood, mica, glass, etc) for the insulation of the signal from the earth wire. The truncated cone has been filled with salt from the Red Sea. After that we insert the wire from the source of the noise through the upper part of the antenna, where we consolidate it with a glass disc of external diameter 3,5cm that has in its center a whole equal to the cross-section/thickness of the coaxial wire and the disc is embedded in the upper part of the antenna as apostate of the coaxial wire from the wall of the tube. For the better alignment of the wire inside the tube it is advisable that the wire is inside a thin glass tube of an external diameter of 10mm and of a length of 65cm. The length of the wire is 3*1 or 1586,25mm. Then there are united with metal welding the wire of the coaxial wire to the lower internal part of the cylindrical tube, the shielding grid on the other hand is united with metal welding to the upper part of the truncated cone. After that, we glue with casein, starting from the golden whip that is found above the connection of the signal (+) (Figure 5), a hemisphere of a diameter of 7mm and height 3,5mm made of ruby (Figure 7). Then, counterclockwise or clockwise, according to the respective antenna, and rotarily, we glue hemispheres of garnet, ruby and garnet. Flowingly, on the next level, that of platinum, starting from the whip above the first golden and according to the direction of each antenna, we glue in the same way hemispheres of carneole, fireopal, carneole and fireopal. Similarly, in iridium yellow topaz and citrine, in the same way in osmium malachite and emerald, in palladium blue sapphire and blue lapis, in rhodium indigo sapphire and iolite and in ruthenium amethyst and fluorite. Then, the antennas are placed inside glass bells and are ready for use. For the enrichment of the signal with the noble information of carbon beside the diamond that exists in the antennas, it is recommended to place around the antennas, wooden planks whose dimensions should be 70cm*5cm*0,5cm dived in olive oil. The wood should preferably come from an olive tree.

The apparatus topographically is placed as follows: The two generators are placed in the east, the counterclockwise antenna towards the north and the clockwise antenna towards the south (Figure 8). The angle formed by the two generators is 90°. Finally there is placed a bridge of silver that connects the earth wires of the two exits (Figures 8, 10). From the centre of the bridge starts the earth wire that goes downwards and from exactly the same point starts the wire that goes upwards and ends in a tube of silver whose upper end is a reversed cone (Figure 11). The length of the tube is 1m; the diameter of the cone is 20cm and its height 20cm.

In order to achieve the aforementioned in the beginning of this text and with the time scale of hours or a few days, the output power of each generator should be at least 0,5 kW.

## Claims

1. Method and apparatus for conversion of entropy to antientropy with the use of white electromagnetic noise which is **characterized by** the fact that the white electromagnetic noise that is produced and emitted, simulates the natural or cosmic noise, emitted with higher intensity than that of the natural prototype.

2. Method and apparatus for conversion of entropy to antientropy with the use of white electromagnetic noise according to claim 1, which is **characterized by** the fact that the emission of the electromagnetic noise is double, the one negatively polarized and with counterclockwise electron flow and the other positively polarized and with clockwise electron flow.

3. Method and apparatus for conversion of entropy to antientropy with the use of white electromagnetic noise according to claims 1 and 2, which is **characterized by** the fact that the negative emission is finally modulated and emitted by a special, counterclockwise, broadband antenna and the positive emission is finally modulated and emitted from a special, clockwise, broadband antenna.
